# EUROPEAN PATENT APPLICATION

(11) **EP 1 325 804 A1**
(43) Date of publication of application: **09.07.2003**
(21) Application number: 02075625.0
(22) Date of filing: 15.02.2002
(51) Int. Cl.: B29C 45/16, A47K 13/02

(54) **Method of molding a toilet seat assembly**

(30) Priority: 03.01.2002 US 37828
(71) Applicant: Talhin/T Corp., Ontario N9E 3L2 (CA)
(72) Inventor: Cecchin, Euclide, Windsor, Ontario N9E 3L2 (CA)
(74) Representative: Wharton, Peter Robert

(57) **Abstract**

A toilet seat assembly **10** includes a toilet seat **12** having a seat skin **14** defining the exterior surfaces thereof and a seat core **1**6 disposed within and surrounded by the seat skin **14** and a cover 18 having a cover skin **20** defining the exterior surfaces thereof and a cover core **22** disposed within and surrounded by the cover skin **20**. The assembly is characterized by the cores **16**, **22** each comprising a waste material. The waste material may be a single polymer wasted in the process of making other products. Alternatively or in combination therewith, combining a plurality of different materials (including different polymers) from different sources may be employed to formulate the waste material.

## Description

### BACKGROUND OF THE INVENTION

### 1. Field of the Invention

The subject invention relates to a toilet seat assembly including a seat and a cover and, more specifically, to molded toilet seat assemblies.

### Description of the Prior Art

Toilet seat assemblies include a seat and cover coupled together by a hinge mechanism that also connects the assembly to a toilet. These toilet seat assemblies have been fabricated from materials such as wood and plastic, some with a solid core surrounded by polymer material. Examples of such prior art techniques are disclosed in the U.S. Patents 3,863,277 to Harrison; 3,988,789 to Blount; 5,991,935 to Wang and 6,154,892 to Hogue.

In all prior systems there has been the continuing objective to reduce the cost of fabricating the toilet seat assemblies.

### SUMMARY OF THE INVENTION AND ADVANTAGES

It is, therefore, an object of the subject invention to produce a toilet seat assembly at a reduced cost. This is accomplished by a method of molding a toilet seat and cover comprising the steps of forming a seat having a seat core surrounded by a seat skin, and forming a cover having a cover core surrounded by a cover skin. The method is characterized by forming the cores of a waste material.

The waste material may be collected from the processes for making other products and mixed into a flowable material that solidifies into the cores. By accumulating and using such waste materials, the cost of the assembly is greatly reduced.

### BRIEF DESCRIPTION OF THE DRAWINGS

Other advantages of the present invention will be readily appreciated as the same becomes better understood by reference to the following detailed description when considered in connection with the accompanying drawings wherein:

Figure 1 is a perspective view of a toilet seat assembly formed in accordance with the subject invention;

Figure 2 is a mold for molding the toilet seat assembly of he subject invention; and

Figure 3 is a schematic view of the method of the subject invention.

### DETAILED DESCRIPTION OF THE PREFERRED EMBODIMENT

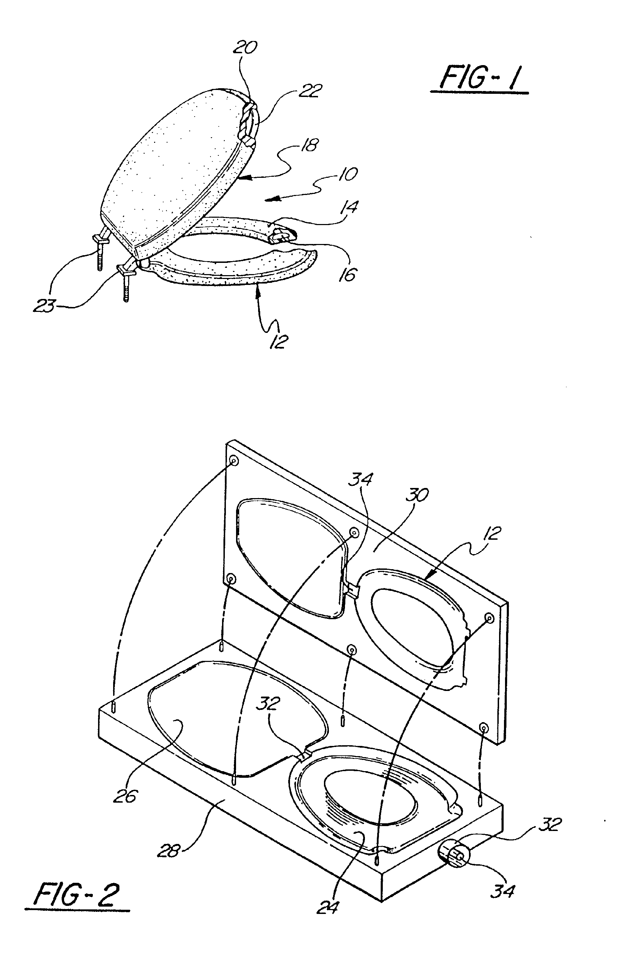

Referring to the Figures, wherein like numerals indicate like or corresponding parts throughout the several views, a toilet seat assembly fabricated in accordance with the subject invention is generally shown at **10** in Figure 1. The toilet seat assembly **10** includes a toilet seat, generally indicated at **12**, having a seat skin **14** defining the exterior surfaces thereof and a seat core 16 disposed within and surrounded by the seat skin **14**. The assembly **10** similarly includes a cover, generally indicated at **18**, including a cover skin **20** defining the exterior surfaces thereof and a cover core **22** disposed within and surrounded by the cover skin **20**. Appropriate and well known hardware **23** hingedly interconnect the seat **12** and cover **18** and mount the assembly **10** on a water closet or toilet.

The assembly is characterized by the cores **16, 22** each comprising a waste material. The waste material may be a single polymer wasted in the process of making other products. Alternatively or in combination therewith, combining a plurality of different materials (including different polymers) from different sources may be employed to formulate the waste material.

The method of fabricating the toilet seat **12** and the cover **18** comprises the known steps of forming the seat **12** having a seat core **16** surrounded by a seat skin **14** and forming the cover **18** having a cover core **22** surrounded by a cover skin **20**, but is characterized by forming the cores **16, 22** of a waste material. As illustrated in Figure 2, this may be accomplished by simultaneously injecting the polymer for the seat skin **14** into a seat mold cavity **24** and into a cover mold cavity **26**, both of which are defined by a mold comprising the mold bottom **28** and mold top **30**. Although the top **30** is shown perpendicular to the bottom **28**, the two parts are disposed in parallel planes when in use and are opened and closed in the manner well known in the art. The seat **12** and cover **18** molding the seat **12** and cover **18** are molded in the same mold **28**, **30** having an interconnecting gate defined by grooves **32** and **34** in the respective mold halves **28** and **30** and interconnecting the seat and cover mold cavities **24** and **26**.

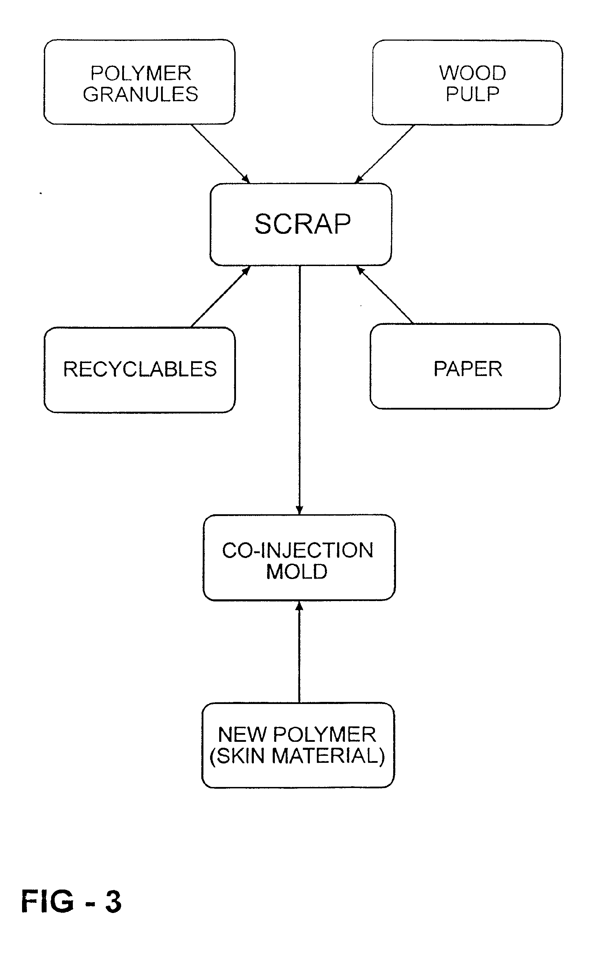

The method is perfected by injecting a waste material into the seat mold cavity **24** and into the cover mold cavity **26** to fill the skin polymer. Actually, the polymer material for the skin is co-injected with the waste material into the mold cavities **24, 26**. This may be accomplished by injecting the waste material in a tube **34** concentrically within a cylinder **32** of the skin polymer, i.e., a jet within a jet. A plurality of such injectors may be disposed about the mold halve **28.** The waste material could include a mixture of waste polymers from different sources, such as other injection processes making other parts. Often products molded from polymers have imperfections and must be discarded. These discarded scarp products can be ground up into granules that can be mixed with granules from other scrap products to provide the waste material. In other words, the method may be further defined as collecting solidified polymers from molding processes for products other than toilet seat assemblies, dividing the solidified polymers into a granular mix, heating the granular mix into a flowable mix, and injecting a waste material including the flowable mix. In some cases the waste material may include particles of wood. As shown in Figure 3, the waste may also include recyclable materials, or even paper.

Obviously, many modifications and variations of the present invention are possible in light of the above teachings. The invention may be practiced otherwise than as specifically described within the scope of the appended claims, wherein that which is prior art is antecedent to the novelty set forth in the "characterized by" clause. The novelty is meant to be particularly and distinctly recited in the "characterized by" clause whereas the antecedent recitations merely set forth the old and well-known combination in which the invention resides. These antecedent recitations should be interpreted to cover any combination in which the incentive novelty exercises its utility. In addition, the reference numerals in the claims are merely for convenience and are not to be read in any way as limiting.

## Claims

1. A method of fabricating a toilet seat **(12)** and cover **(18)** comprising the steps of;
forming a seat **(12)** having a seat core **(16)** surrounded by a seat skin **(14)**,
forming a cover **(18)** having a cover core **(22)** surrounded by a cover skin **(20)**,
said method **characterized by** forming said cores **(16, 22)** of a waste material.

2. A method as set forth in claim 1 further defined as combining a plurality of different materials from different sources to formulate the waste material.

3. A method of molding a toilet seat **(12)** and cover **(18)** comprising the steps of;
injecting a skin polymer into a seat mold cavity **(24)** and into a cover mold cavity **(26)**, and
injecting a waste material into the seat mold cavity **(24)** and into the cover mold cavity **(26)** to fill the skin polymer.

4. A method as set forth in claim 1 further defined as injecting a waste material including a mixture of waste polymers from different sources.

5. A method as set forth in claim 1 further defined as injecting a waste material including particles of wood.

6. A method as set forth in claim 1 further defined as collecting solidified polymers from molding processes for products other than toilet seat assemblies, dividing the solidified polymers into a granular mix, heating the granular mix into a flowable mix, and injecting a waste material including the flowable mix.

7. A method as set forth in claim 4 including the step of molding the seat **(12)** and cover **(18)** in the same mold having a gate **(32, 34)** interconnecting the seat and cover mold cavities.

8. A toilet seat assembly comprising;
a toilet seat **(12)** including a skin defining the exterior surfaces and a core disposed within and surrounded by said seat skin **(14)**,
a cover **(18)** including a cover skin **(20)** defining the exterior surfaces thereof and a cover core **(22)** disposed within and surrounded by said cover skin **(20)**,
said assembly **characterized by** said cores **(16, 22)** each comprising a waste material.

9. An assembly as set forth in claim 10 wherein said skins comprise a polymer and said waste material includes a mixture of different waste polymers.

10. An assembly as set forth in claim 10 wherein said waste material includes particles of wood.
